# NEUE EUROPÄISCHE PATENTSCHRIFT

(11) **EP 3 616 171 B2**
(45) Veröffentlichungstag und Bekanntmachung des Hinweises auf die Entscheidung über den Einspruch: **22.11.2023**
(45) Hinweis auf die Patenterteilung: 24.02.2021
(21) Anmeldenummer: 18729022.6
(22) Anmeldetag: 24.04.2018
(51) Int. Cl.: G07F 7/06

(54) **VERFAHREN ZUM IDENTIFIZIEREN VON PFANDGUT**
METHOD FOR IDENTIFYING DEPOSIT MATERIAL
PROCÉDÉ D'IDENTIFICATION DE LA MARCHANDISE EN CONSIGNATION

(30) Priorität: 24.04.2017 DE 102017108641
(43) Veröffentlichungstag der Anmeldung: 04.03.2020
(73) Patentinhaber: Polysecure GmbH, 79111 Freiburg (DE)
(72) Erfinder: MÖSSLEIN, Jochen, 79100 Freiburg (DE); KATUS, Philip, 79100 Freiburg (DE); KIRCHENBAUER, Daniel, 79283 Bollschweil (DE); FAHR, Martin, 03130 Felixsee (DE); RICHTE, Christian, 85238 Petershausen (DE); GALFE, Günther, 81827 München (DE)
(74) Vertreter: Erbacher, Martin
(86) Internationale Anmeldenummer: PCT/DE2018/100394
(87) Internationale Veröffentlichungsnummer: WO 2018/196921

(56) Entgegenhaltungen:
- EP-A2- 1 515 280
- EP-A2- 2 256 701
- WO-A1-2004/044868

## Beschreibung

Die vorliegende Erfindung betrifft ein Verfahren zum Identifizieren von Pfandgut wie Pfandflaschen und anderen bepfandeten Verpackungsprodukten.

Pfandflaschen sind Bestandteil eines weit verbreiteten Pfandsystems, in dem der Kunde bei einem Getränkeanbieter für eine gekaufte Flasche ein Pfand hinterlässt und diesen bei Rückgabe der Flasche zurückerhält. Auf diese Weise können Getränkeflaschen ressourcenschonend und energieeffizient mehrfach verwendet werden. Auch eine Vielzahl von Pfandautomaten, in denen Pfandflaschen bei der Rückgabe automatisiert erkannt werden, sind weit verbreitet.

In der DE 10 2009 026 557 A1 wird eine Leergut-Rücknahmevorrichtung und ein Verfahren zum Betreiben derselben beschrieben. In diesem Verfahren wird ein identifizierbares Merkmal, das in dem zu sortierenden Leergut enthalten ist, analysiert Vorausgesetzt wird hierbei allerdings eine Ruhelage des Pfandguts während der Analyse.

In der DE 10 2011 107 704 A1 wird einen Eingabeeinheit für einen Leergutrücknahmeautomaten beschrieben. In dem hier beschriebenen Verfahren ist eine bestimmte Positionierung einer Markierung, die die Identifizierung des bereitgestellten Pfandguts erlauben soll, zur Analyse notwendig.

In der EP 1235 191 B1 wird ein Gerät für die Rückgabe starrer oder biegsamer Behälter zur Aufbewahrung von flüssigen oder festen Produkten mittels Identifizierung bestimmter Parameter beschrieben.

Die Verfahren des Stands der Technik zum Identifizieren von Pfandgut sind in mehrfacher Hinsicht nachteilhaft. Zum einen sind die bisher zur Identifizierung von Pfandflaschen und anderem Leergut verwendeten Erkennungsmerkmale nicht sicher genug, d.h. einfach zu falschen. Insbesondere durch die in Deutschland üblichen hohen Pfandbeträge für Leergut können daher durch Pfandbetrug erhebliche wirtschaftliche Schäden entstehen. Darüber hinaus können bislang verwendete Erkennungsmerkmale durch Materialalterung (Licht, Temperatur, chemische Einwirkungen etc.) leicht unleserlich werden.

Ebenso erfordern bekannte Vorrichtungen, die zum Identifizieren von Pfandgut verwendet werden, oft mechanische Transportvorrichtungen, beispielsweise zum Transport des Pfandguts zur Analysevorrichtung (z.B. ein Förderband) oder zur Orientierung des Erkennungsmerkmals zur Analysevorrichtung (z.B. Drehung einer Flasche). Hieraus ergeben sich die Nachteile, dass der Benutzer das Objekt oft in einer bestimmten Art und Weise in die Transporteinrichtung einlegen muss (liegend, stehend, in einer bestimmten Orientierung etc.), ein hoher technischer Aufwand von Nöten ist, die Transporteinrichtung nicht für alle Objektgrößen gleichzeitig geeignet ist und ein entsprechendes Verfahren daher langsam, verschleißanfällig und verschmutzungsempfindlich ist Schließlich ist es mittels der Verfahren des Stands der Technik nicht möglich, Pfandgut unterschiedlichster Größe unter Verwendung lediglich einer einzigen Vorrichtung zu identifizieren.

Es ist daher die Aufgabe der vorliegenden Erfindung, ein Verfahren zum Identifizieren von Pfandgut bereitzustellen, das Nachteile des Stands der Technik überwindet, insbesondere eine erhöhte Sicherheit gegen Fälschungen des Pfandguts bereitstellt und eine zuverlässige Identifizierung in einfacher Verfahrensführung ermöglicht. Ebenso soll durch das Verfahren ermöglicht werden, Objekte unterschiedlicher Größe in einfacher Weise identifizieren zu können, wobei die Objekte in Bewegung sein können, um einen höheren Durchsatz an Pfandgütern zu ermöglichen.

Diese Aufgaben werden gelöst durch ein Verfahren zum Identifizieren von Pfandgut, umfassend die Schritte: Schritt a) Bereitstellen einer Vorrichtung, umfassend ein Führungsrohr in im wesentlichen aufrechter Position, das einen Einlass und einen Auslass hat; und Mittel zum Analysieren des dynamischen Lumineszenzverhaltens einer lumineszierenden Substanz; wobei die Mittel zum Analysieren des dynamischen Lumineszensverhaltens der lumineszierenden Substanz derart angeordnet sind, um das dynamische Lumineszenzverhalten der lumineszierenden Substanz in dem Führungsrohr zu analysieren; Schritt b) Einbringen eines Pfandguts, das die lumineszierende Substanz enthält, in das Führungsrohr durch den Einlass; Schritt c) Analysieren des dynamischen Lummeszenzverhaltens der lumineszierenden Substanz, die in dem Pfandgut enthalten ist, während der Bewegung des Pfandguts durch das Führungsrohr unter Verwendung der Mittel zum Analysieren des dynamischen Lumineszenzverhaltens der lumineszierenden Substanz; und Schritt d) Klassieren des Pfandguts gemäß dem Ergebnis des Analysierens, wobei das dynamische Lumineszenzverhalten das Lumineszenzemissionsverhalten über der Zeit ist, wobei die Intensität der Lumineszenzemission über das gesamte Spektrum integriert wird.

Die Erfindung betrifft ein Verfahren zum Identifizieren von Pfandgut. Unter Pfandgut im Sinne der vorliegenden Anmeldung sollen Verpackungen verstanden werden, die sich zur Wiederverwendung ihrer selbst oder ihrer Substanz eignen. Das erfindungsgemäß vorgesehene Pfandgut kann insbesondere Leergut sein, also Behälter, die nach Verbrauch des Inhalts an den Verkäufer zurückgegeben werden sollen. Insbesondere kann vorgesehen sein, dass es sich bei dem Pfandgut um Lebensmittelbehälter handelt. So kann vorgesehen sein, dass es sich bei dem Pfandgut um eine Flasche handelt, insbesondere um eine Glasflasche, eine Kunststoffflasche etc..

Der Begriff "enthalten" wie hinsichtlich des Enthaltenseins der lumineszierenden Substanz in dem Pfandgut verwendet, ist im Sinne der vorliegenden Erfindung weit zu verstehen. Insbesondere sollen durch diesen Begriff auch Möglichkeiten umfasst sein, in denen die lumineszierende Substanz in einem Träger enthalten ist, der dann auf das Pfandgut aufgebracht wird, in denen die lumineszierende Substanz direkt, etwa durch Druck, auf das Pfandgut aufgebracht wird, etc.. Ein geeigneter Träger in diesem Zusammenhang kann insbesondere ein Etikett, ein Aufkleber oder eine ähnlich geartete Aufbringungsmöglichkeit sein.

Die Vorrichtung, die in dem erfindungsgemäßen Verfahren verwendet wird, umfasst ein Führungsrohr. Dieses ist im Wesentlichen in aufrechter Position angeordnet. Dies bedeutet, dass das Führungsrohr senkrecht zur Erdoberfläche angeordnet sein kann, um so ein Fallen des Pfandguts innerhalb der Vorrichtung durch das Führungsrohr vom Einlass eher zum Auslass hin zu ermöglichen. Der Begriff fallen impliziert, dass die Bewegung des Pfandguts lediglich unter Einfluss der Schwerkraft, also insbesondere ohne weitere mechanische Mittel, etwa Förderbänder, mechanisch bewegte Rollen etc., erfolgen kann. Durch die Klarstellung, dass das Führungsrohr "im wesentlichen" in aufrechter Position sein soll, soll kenntlich gemacht werden, dass auch ein schräge Anordnung des Führungsrohr, d.h. eine Neigung des Führungsrohr hinsichtlich der Erdoberfläche, vorgesehen sein kann, solange die Bewegung des Pfandguts unter ausschließlichem Einfluss der Schwerkraft gewährleistet ist. In diesem Fall rutscht das Pfandgut auf einer Oberfläche des Führungsrohrs vom Einlass her zum Auslass hin.

Das Führungsrohr ist hinsichtlich seiner Form, insbesondere der geometrischen Form seines Durchmessers, nicht beschränkt. Insbesondere können runde, ovale, rechteckige oder polygonale Durchmesser des Führungsrohrs vorgesehen sein, solange dieses derart ausgestaltet ist, dass das Pfandgut ohne Probleme durch das Führungsrohr hindurchgeführt werden kann.

Das Führungsrohr kann Vorrichtungen enthalten, welche ein Rutschen des Pfandguts erleichtern bzw. ein Blockieren durch Pfandgut verhindern, z.B. Vibratoren, Rüttler, etc..

Insbesondere kann vorgesehen sein, dass das Führungsrohr an allen Stellen einen Durchmesser hat, der größer ist als der des Pfandguts.

Das Klassieren des Pfandguts kann die Unterscheidung zwischen authentischen und nicht-authentischen Pfandgütern und/oder Einteilung der Pfandgüter in Klassen und/oder Bewertung der Pfandgüter umfassen. Das Klassieren kann insbesondere beinhalten: Unterscheidung zwischen authentischen und nicht-authentischen Pfandgütern, Einteilung der Pfandgüter in Klassen, basierend auf den Klassen Bewertung der Pfandgüter (zur Ermittlung des Pfandbetrags) und/oder Sortierung der Pfandgüter. Akzeptieren und nicht-Akzeptieren sind nachgelagerte Optionen, ebenfalls basierend auf der Klassierung.

Ferner ist vorgesehen, dass das dynamische Lumineszenzverhalten das Lumineszenzemissionsverhalten über die Zeit ist.

Ebenfalls ist bevorzugt, dass die Lumineszenzemission zeitlich aufgelöst wird.

Vorzugsweise vorgesehen ist, dass eine Abklingkonstante für eine oder mehrere Emissions-Wellenlängen oder -Wellenlängenbereiche bestimmt wird.

Ebenso bevorzugt ist, dass die Lumineszenzemission über einen festgelegten Zeitraum integriert wird.

Ebenfalls kann vorgesehen sein, dass die Lumineszenzemission spektral integriert wird.

Ebenfalls ist bevorzugt, dass Parameter wie die Abklingkonstante aus dem gemessenen Lumineszenzverhalten ermittelt und mit in einer Datenbank hinterlegten Soll-Werten abgeglichen werden.

Weiter bevorzugt ist, dass die lumineszierende Substanz ausgewählt ist aus der Gruppe der fluoreszierenden Materialien, die nach Anregung mit elektromagnetischer Strahlung elektromagnetische Strahlung emittieren, deren Wellenlänge größer und/oder kleiner und/oder gleich der Anregungswellenlänge ist.

Ebenso ist ein Verfahren bevorzugt, das die Bestimmung der dynamischen Lumineszenzeigenschaften im UV und/oder VIS und/oder IR durchführt.

Das erfindungsgemäße Verfahren dient insbesondere zur Identifikation und/oder Authentifizierung von Pfandgut

Darüber hinaus ist bevorzugt, dass die Mittel zum Analysieren des dynamischen Lumineszenzverhaltens der lumineszierenden Substanz ringförmig um das Führungsrohr herum angeordnet sind. Der Begriff "ringförmig" ist hierbei weit zu verstehen und umfasst insbesondere jede Anordnung, die geeignet ist, die Emission oder die Emissionen aus allen Raumwinkeln rund um das Pfandgut herum zu erfassen. Insbesondere soll der Begriff ringförmig nicht einschränkend hinsichtlich der genauen geometrischen Gestaltung verstanden werden. So kann eine ringförmige Anordnung auch eine rechteckige oder andersartig polygonal geartete Anordnung der Mittel einschließen. Durch die ringförmige Anordnung wird eine orieatierungsunabhängige Analyse des dynamischen Lumineszenzverhaltens der lumineszierenden Substanz, die in dem Pfandgut enthalten ist, ermöglicht. Hierbei wird ausgenutzt, dass sich die Lumineszenz isotrop, d.h. in alle Raumrichtungen, ausbreitet. Eine Ausrichtung der Markierung ist auf Grund der ringförmigen Anordnung der Mittel zum Analysieren in dieser Ausführungsform nicht notwendig, wodurch die Verfahrensführung vereinfacht wird.

Insbesondere kann vorgesehen sein, dass es sich bei den Mitteln zum Analysieren des dynamischen Lumineszenzverhaltens der lumineszierenden Substanz um eine Detektorvorrichtung handelt. Bei der Detektorvorrichtung können mehrere Detektoren ringförmige angeordnet sein. Ebenso kann die Detektorvorrichtung durch einen Detektor gebildet werden, welcher ringförmige ausgebildet ist. Letzteres hat den Vorteil, dass eine Synchronisation mehrerer Detektoren nicht notwendig ist, was die Steuerung wesentlich vereinfacht.

Ebenso kann in dieser Ausführungsfonn das dynamische Lumineszenzverhalten mit Abstand zur Oberfläche des Pfandguts gemessen werden, so dass das Führungsrohr für Pfandflaschen mit verschiedenem Durchmesser und Pfandgüter verschiedener Größe gestaltet werden kann. Der Abstand zwischen Detektionseinrichtung und Pfandgut kann 0-50 cm, 0-10 cm, 0-5 cm, 0-1 cm betragen. Dadurch können unterschiedlich große Pfandflaschen und Pfandgüter identifiziert werden.

Ebenso kann vorgesehen sein, dass das Verfahren einen weiteren Schritt (e) nach dem Schritt d) umfasst: Sortieren des entsprechend klassierten Pfandguts.

Darüber hinaus ist vorgesehen, dass das Verfahren nach einem der vorangehenden Ansprüche, umfassend einen weiteren Schritt f) nach dem Schritt d): Ausgeben oder Einbehalten des entsprechend klassierten Pfandguts.

Zur Ausgestaltung dieser Ausführungsformen kann insbesondere vorgesehen sein, dass sich an den Auslass Vorrichtungen anschließen, die das Pfandgut, je nach Klassieren, in verschiedene Fraktionen austeilen.

Das Sortieren kann basieren auf der Klassierung, welche auf dem Lumineszenzverhalten beruht und/oder auf weiteren Markierungen, wie z.B. Bar-Code/QR-Code/Symbol/Artikelnummer etc. und/oder der Form des Pfandguts (z.B. Flaschenform) und/oder Materialeigenschaften. Zur Überprüfung von Materialeigenschaften können weitere Detektoren vorgesehen sein (z.B. Metalldetektoren).

Insbesondere kann vorgesehen sein, dass die Vorrichtung ein Leergutrücknahmeautomat ist.

In dieser Ausführungsform kann insbesondere vorgesehen sein, dass der Leergutrücknahmeautomat weitere übliche gattungsgemäße Mittel umfasst, etwa Eingabevorrichtungen, Ausgabevorrichtungen zur Ausgabe eines Belegs etc..

Im Gegensatz zu Absolutmessungen des Stands der Technik wurde überraschend festgestellt, dass Relativmessungen optischer Eigenschaften, wie z.B. die Analyse des zeitlichen Verhaltens einer Lumineszenzemission, unempfindlich gegenüber Störgrößen wie z.B. Additiven oder aufgelagerten Verschmutzungen sind. Eine Identifikation von Pfandgut unter Ausnutzung relativer Lumineszenzeigenschaften wird daher durch die inhärenten im Wesentlichen optischen Eigenschaften des zu identifizierenden Pfandguts nicht beeinflusst

Die Lumineszenzeigenschaften können auf lumineszierende Substanzen aus der Gruppe der fluoreszierenden Materialien beruhen. Unter Lumineszenz wird die Emission elektromagnetischer Strahlung nach Eintrag von Energie verstanden. Dabei ist bevorzugt, dass der Energieeintrag über Photonen erfolgt, die beobachtete Lumineszenz somit Photolumineszenz ist. Die Photolumineszenz kann im UV und/oder VIS und/oder IR auftreten. Die Wellenlänge der emittierten elektromagnetischen Strahlung kann größer und/oder kleiner und/oder gleich der Anregungswellenlänge sein.

Als fluoreszierende Materialien können beispielsweise Materialien gemäß der Patentanmeldung DE 10 2014 105 846 A1 eingesetzt werden.

Durch die Ausnutzung dynamischer Lumineszenzeigenschaften kann eine erhöhte Fälschungssicherheit erreicht werden. Dies gilt insbesondere gegenüber Verfahren, in denen lediglich die Intensität oder Wellenlänge einer bestimmten Fluoreszenzmarkierung gemessen wird.

Eine Ausführungsform zeichnet sich dadurch aus, dass zur Identifikation des Pfandguts ein Lumineszenzemissionsverhalten über die Zeit bestimmt wird. Hierunter ist zu verstehen, dass nach dem Ende der Anregung die Emission der Lumineszenz in einem festgelegten Zeitraum messtechnisch erfasst wird. Die messtechnische Erfassung kann in dem Zeitintervall nach erfolgter Anregung der Lumineszenz einmal oder mehrfach hintereinander durchgeführt werden. Hierbei kann zwischen dem Ende der Anregung und dem Beginn der ersten Messung eine festgelegte Totzeit vorgesehen sein. Die Dauer der Einzelmessungen und damit die Zeit, in der die absolute Lumineszenzintensität integriert wird, kann identisch oder verschieden sein. Die Dauer einer Einzelmessung beträgt 1µs-10ms, bevorzugt 10µs-1ms, noch bevorzugter 50µs-500µs. Dieses Verfahren eröffnet mehrere Optionen:
Nach der Anregung kann die Lumineszenzintensität für eine Emissionswellenlänge oder einen Wellenlängenbereich nach festgelegten Zeitintervallen mehrfach bestimmt werden. Aus den erhaltenen absoluten Intensitäten können Intensitätsverläufe über der Zeit gebildet werden. Dies kann auch für mehrere Emissionswellenlängen oder Wellenlängenbereiche durchgeführt werden. Ebenso können Intensitätsverhältnisse zwischen verschiedenen Emissionswellenlängen oder Emissionswellenlängenbereichen gebildet werden.

Auch ist bevorzugt, dass die Abklingkonstante für eine oder mehrere Emissions-Wellenlängen oder Wellenlängenbereiche bestimmt wird. Unter der Abklingkonstante wird die Zeitspanne verstanden, in der die Ausgangsintensität der Emission auf das 1/e-fache abfällt.

Das erfindungsgemäße Verfahren zeichnet sich dadurch aus, dass die Intensität der Lumineszenzemission über das gesamte Spektrum integriert wird. Dies ist vorteilhaft, wenn schwache Emissionssignale ausgewertet werden müssen.

Zur Detektion der Lumineszenzeigenschaften können verschiedene Detektoren wie Schwarzweiß-Kameras, Farb-Kameras, Photomultiplier, Spektrometer, Fotozellen, Fotodioden, Fototransistoren alleine oder in Kombination zum Einsatz kommen. In den Detektionseinrichtungen können optische Filter wie z.B. Langpass/Kurzpass/Bandpass-Filter zum Einsatz kommen. In einer anderen Ausführungsform können die Mittel zum Analysieren insbesondere Mittel zum Erfassen der Emissionen sein, die insbesondere auch lichtleitende Elemente umfassen können kann. In dieser Ausführungsform wird die Emission auf einen Sensor gebündelt, so dass der Sensor die Emission nicht direkt erfassen müssen.

Zur Anregung der Lumineszenz durch die Mittel zum Analysieren des dynamischen Lumieszenzverhaltens der lumineszierenden Substanz können breit- und/oder schmalbandige Quellen wie z.B. Laser, Laserdioden, lichtemittierende Dioden (LEDs), Xenonlampen, Halogenlampen einzeln oder in Kombination zur Anwendung kommen. Die Anregungsquellen können einzeln aktiviert oder gleichzeitig oder sequentiell in unterschiedlichen Kombinationen aktiviert werden. In den Anregungseinrichtungen können optische Filter wie Langpass/Kurzpass/Bandpass-Filter zum Einsatz kommen.

Darüber hinaus ist bevorzugt, dass die Mittel zur Anregung der Lumineszenz ringförmig um das Führungsrohr herum angeordnet sind. Hierdurch wird eine Anregung der Lumineszenz unabhängig von der Ausrichtung der Lumineszenzmarlderung, die in dem Pfandgut enthalten ist, ermöglicht. Eine Ausrichtung der Markierung ist in dieser Ausführungsform nicht notwendig, wodurch die Verfahrensführung vereinfacht wird.

Die Mittel zur Anregung und Detektion der Lumineszenz können in derselben Ebene oder entlang des Führungsrohres versetzt angeordnet sein. Die Anordnung in derselben Ebene hat den Vorteil, dass sich das Pfandgut im Moment der Anregung bereits auf Höhe der Detektoren befindet, so dass die maximale Intensität der Lumineszenzemission delektiert werden kann.

Darüber hinaus ist möglich, das Mittel zum Analysieren des dynamischen Lumineszenzverhaltens der lumineszierenden Substanz und die Mittel zur Anregung der Lumineszenz mehrfach entlang des Führungsrohrs anzuordnen, sodass mehrere Anregungs- und Messpositionen entlang des Führungsrohrs gebildet werden. Hierdurch können verschiedene Anregungs-/Mess-Kombinationen bei Durchgang des Pfandguts verwendet werden. Abfolge und Anzahl der Anregungs- und Messmittel sind beliebig kombinierbar.

Zur Identifikation des Pfandguts gemäß den vorgestellten Verfahren muss eine Zuordnung zwischen den gemessenen Lumineszenzeigenschaften einerseits und dem markierten Pfandgut andererseits hergestellt werden.

Dabei ist bevorzugt, dass Soll-Lumineszenzeigenschaften in einer Datenbank hinterlegt werden. Durch experimentelle Bestimmung kann für jedes Pfandgut, das einen oder mehrere Fluoreszenz-Marker enthält, eine oder mehrere Lumineszenzeigenschaften bestimmt. Bei Durchführung der Identifikation werden die gemessenen Lumineszenzeigenschaften mit den in der Datenbank zuvor hinterlegten Soll-Lumineszenzeigenschaften abgeglichen und auf diese Weise eine Identifikation ermöglicht.

Die erfindungsgemäßen Verfahren können zur Identifikation und/oder Sortierung von Pfandgütern genutzt werden.

Im Folgenden soll der Gegenstand der Anmeldung anhand eines konkreten Ausfiihrungsbeispiels erläutert werden, wobei dieses Ausführungsbeispiel lediglich der Verdeutlichung und nicht der Beschränkung des Schutzbereiches dient.

### Ausführungsbeipiel:

Verwendet wurde eine Vorrichtung, in der ein Führungsrohr mit einem Innendurchmesser von 144,6 mm verwendet wurde. Das Führungsrohr war vertikal zum Boden angeordnet. Als Mittel zum Analysieren des dynamischen Lumineszenzverhaltens wurde eine Anregungsquelle in Form von 8 LEDs mit einem Emissionsmaximum bei 950 nm und einer Bestrahlungsleistung von ca. 16 W verwendet. Mittels der Anregungsquelle wurden Anregungspulse mit einer Pulsdauer von 20 bis 300 µs erzeugt. Zwischen den Pulsen wurde eine Anregubgspause von 60 µs eingehalten. Ferner wurden als weitere Mittel zum Analysieren IR-Photosensoren des Typs BTW 34 FS enthalten. Gemessen wurde die Intensität der Lumineszenzemission in den Anregungspausen. Es wurde die Lichtintensität in mehreren Zeit-Intervallen gemessen und daraus die Abklingkonstante bestimmt.

Die im Vorangehenden beschriebene Vorrichtung wurde beispielhaft zur Identifikation von zwei verschiedenen Pfandgütern verwendet. Die Pfandgüter unterschieden sich (hinsichtlich der darin enthaltenen lumineszierenden Substanz) hinsichtlich des Anregungsmaxünums, des Emissionsmaximums und den Abklingkonstanten, Es wurden Abklingkonstanten mit den Werten 270 µs und 330 µs verwendet. Nach dem Einbringen des jeweiligen Pfandguts in das Führungsrohr fiel das Pfandgut unter Einfluss der Schwerkraft nach unten. Während das Pfandgut die im Vorangehenden genannte Analysevorrichtung passierte, wurde die lumineszierende Substanz durch die Bestrahlungsquelle angeregt, die Lumineszenzemission erfasst und die Abklingkonstante des enthaltenen Lumineszenzmarkers in oben angegebener Weise bestimmt. Sowohl die Anregung als auch die Messung erfolgte hierbei während der Bewegung des Pfandguts in dem Führungsrohr. Basierend auf der ermittelten Abklingkonstante wurde das Pfandgut klassiert, wobei die Abklingkonstante 270 µs der Zuordnung eines Pfandwertes zu dem Pfandgut diente, während die Abklingkonstante von 330 µs einer entsprechenden Nichtzuordnung diente.

Die in der vorstehenden Beschreibung und in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Verfahren zum Identifizieren von Pfandgut, umfassend die Schritte:
a) Bereitstellen einer Vorrichtung, umfassend:
aa) ein Führungsrohr in im wesentlichen aufrechter Position, das einen Einlass und einen Auslass hat; und
bb) Mittel zum Analysieren des dynamischen Lumineszenzverhaltens einer lumineszierenden Substanz;
wobei die Mittel zum Analysieren des dynamischen Lumineszenzverhaltens der lumineszierenden Substanz derart angeordnet sind, um das dynamische Lumineszenzverhalten der lumineszierenden Substanz, auch wenn diese sich bewegt, in dem Führungsrohr zu analysieren;
b) Einbringen eines Pfandguts, das die lumineszierende Substanz enthält, in das Führungsrohr durch den Einlass;
c) Analysieren des dynamischen Lumineszenzverhaltens der lumineszierenden Substanz, die in dem Pfandgut enthalten ist, unter Verwendung der Mittel zum Analysieren des dynamischen Lumineszenzverhaltens der lumineszierenden Substanz; und
d) Klassieren des Pfandguts gemäß dem Ergebnis des Analysierens;
wobei das dynamische Lumineszenzverhalten das Lumineszenzemissionsverhalten über der Zeit ist, wobei die Intensität der Lumineszenzemission über das gesamte Spektrum integriert wird.

2. Verfahren nach Anspruch 2, wobei eine Abklingkonstante für eine oder mehrere Emissionswellenlängen bestimmt wird.

3. Verfahren nach einem der vorangehenden Ansprüche, wobei die lumineszierende Substanz ausgewählt ist aus der Gruppe der fluoreszierenden Materialien, die nach elektromagnetischer Anregung elektromagnetische Strahlung emittieren, deren Wellenlänge größer und/oder kleiner und/oder gleich der Anregungswellenlänge ist.

4. Verfahren nach einem der vorangehenden Ansprüche, wobei die Mittel zum Analysieren des dynamischen Lumineszenzverhaltens der lumineszierenden Substanz ringförmig um das Führungsrohr herum angeordnet sind.

5. Verfahren nach einem der vorangehenden Ansprüche, wobei das Verfahren einen weiteren Schritt e) nach dem Schritt d) umfasst:
e) Sortieren des entsprechend klassierten Pfandguts.

6. Verfahren nach einem der vorangehenden Ansprüche, umfassend einen weiteren Schritt f) nach dem Schritt d):
f) Ausgeben oder Einbehalten des entsprechend klassierten Pfandguts.

7. Verfahren nach einem der vorangehenden Ansprüche, wobei das Pfandgut eine Pfandflasche ist.

8. Verfahren nach einem der vorangehenden Ansprüche, wobei die Vorrichtung ein Leergutrücknahmeautomat ist.

## Claims

1. Method of identifying a deposit-paid items, comprising the steps of:
a) providing a device comprising:
aa) guide tube in a substantially upright position tube that has an inlet and an outlet; and
bb) means for analysing the dynamic luminescence behaviour of a luminescent substance;
wherein the means for analysing the dynamic luminescence behaviour of the luminescent substance are arranged so as to analyse the dynamic luminescence behaviour of the luminescent substance, even if it is moving, in the guide tube;
b) introduction of a deposit-paid item that contains the luminescent substance into the guide tube through the inlet;
c) analysis of the dynamic luminescence behaviour of the luminescent substance that is contained in the deposit-paid item using the means for analysing the dynamic luminescence behaviour of the luminescent substance; and
d) classification of the deposit-paid item according to the result of the analysis;
wherein the dynamic luminescence behaviour is the luminescence emission behaviour over time, wherein the intensity of the luminescence emission is integrated over the entire spectrum.

2. Method according to claim 1, wherein a decay constant is determined for one or more emission wavelengths.

3. Method according to one of the preceding claims, wherein the luminescent substance is selected from the group of fluorescent materials that emit electromagnetic radiation following electromagnetic excitation, whose wavelength is greater and/or smaller than and/or equal to the excitation wavelength.

4. Method according to one of the preceding claims, wherein the means for analysing the dynamic luminescence behaviour of the luminescent substance are arranged in a ringshaped fashion around the guide tube.

5. Method according to one of the preceding claims, wherein the method comprises a further step e) after step d):
e) sorting of the accordingly classified deposit-paid item.

6. Method according to one of the preceding claims, comprising a further step f) after step d):
f) return or retention of the accordingly classified deposit-paid item.

7. Method according to one of the preceding claims, wherein the deposit-paid item is a returnable bottle.

8. Method according to one of the preceding claims, wherein the device is a reverse vending machine.

## Revendications

1. Procédé d'identification de marchandise consignée comprenant les étapes consistant à :
a) fournir un dispositif comprenant :
aa) un tube de guidage dans une position sensiblement verticale, qui comporte une entrée et une sortie ; et
bb) des moyens d'analyse du comportement dynamique de la luminescence d'une substance luminescente ;
les moyens d'analyse du comportement dynamique de la luminescence de la substance luminescente étant agencés pour analyser le comportement dynamique de la luminescence de la substance luminescente dans le tube de guidage, même lorsque ladite substance se déplace ;
b) introduire une marchandise consignée qui contient de la substance luminescente, dans le tube de guidage à travers l'entrée ;
c) analyser le comportement dynamique de la luminescence de la substance luminescente qui est contenue dans la marchandise consignée, à l'aide des moyens d'analyse du comportement dynamique de la luminescence de la substance luminescente ; et
d) classer la marchandise consignée en fonction du résultat de l'analyse ;
le comportement dynamique de la luminescence consistant dans le comportement d'émission de luminescence en fonction du temps, l'intensité de l'émission de luminescence étant intégrée sur l'ensemble du spectre.

2. Procédé selon la revendication 1 dans lequel une constante d'affaiblissement est déterminée pour une ou plusieurs longueurs d'onde d'émission.

3. Procédé selon l'une quelconque des revendications précédentes, la substance luminescente étant choisie dans le groupe des matériaux fluorescents qui, après excitation électromagnétique, émettent un rayonnement électromagnétique dont la longueur d'onde est supérieure et/ou inférieure et/ou égale à la longueur d'onde d'excitation.

4. Procédé selon l'une quelconque des revendications précédentes, dans lequel les moyens d'analyse du comportement dynamique de la luminescence de la substance luminescente sont agencés de manière annulaire autour du tube de guidage.

5. Procédé selon l'une quelconque des revendications précédentes dans lequel le procédé comprend une étape e) qui suit l'étape d) et qui consiste à :
e) trier la marchandise consignée alors classée.

6. Procédé selon l'une quelconque des revendications précédentes, comprenant une étape f) qui suit l'étape d) et qui consiste à :
f) rejeter ou accepter la marchandise consignée alors classée.

7. Procédé selon l'une quelconque des revendications précédentes dans lequel la marchandise consignée est une bouteille consignée.

8. Procédé selon l'une quelconque des revendications précédentes dans lequel le dispositif est un automate de déconsignation.
